# EUROPEAN PATENT APPLICATION

(11) **EP 4 700 696 A2**
(43) Date of publication of application: **25.02.2026**
(21) Application number: 25196979.6
(22) Date of filing: 20.08.2025
(51) Int. Cl.: G06T 5/60, G06T 3/4046

(54) **PANORAMIC IMAGE GENERATION METHOD AND APPARATUS, ELECTRONIC DEVICE, AND STORAGE MEDIUM**

(30) Priority: 20.08.2024 CN 202411143728
(71) Applicant: Beijing Zitiao Network Technology Co., Ltd., Beijing 100190 (CN)
(72) Inventor: Yang, Bangbang, Beijing, 100028 (CN); Gong, Tingting, Beijing, 100028 (CN); Wang, Keke, Beijing, 100028 (CN); Ma, Lin, Beijing, 100028 (CN); Ma, Yuewen, Beijing, 100028 (CN)
(74) Representative: Marks & Clerk LLP

(57) **Abstract**

The present disclosure provides a panoramic image generation method and apparatus, an electronic device, and a storage medium. A panoramic image generation method includes: generating a first panoramic image with a first resolution based on image description text (S11); and redrawing and zooming in the first panoramic image, and adding an image detail into the first panoramic image, to obtain a second panoramic image with a second resolution (S12). The first resolution is smaller than the second resolution. By adding an image detail while redrawing and zooming in the panoramic image, a high resolution can be achieved, and a true local detail is ensured.

## Description

### FIELD

The present disclosure relates to the field of computer technologies, and in particular, to a panoramic image generation method and apparatus, an electronic device, and a storage medium.

### BACKGROUND

In the field of extended reality technologies(such as virtual reality, augmented reality, and mixed reality), building a comfortable immersive scene can enhance the user experience. With the development of large-scale modeling technologies, a user can generate an image through text and achieve generation of a custom image.

In an immersive extended reality scene, unlike an image generated based on ordinary text, it is necessary to generate a 360° panoramic image rather than a single photographic perspective image or an image of a single object. At present, a 360° panoramic image generation technology has the problems of low resolution of a generated image and the like.

### SUMMARY

The present disclosure provides a panoramic image generation method and apparatus, an electronic device, and a storage medium.

The present disclosure uses the following technical solutions.

In some embodiments, the present disclosure provides a panoramic image generation method, including:
generating a first panoramic image with a first resolution based on image description text; and
redrawing and zooming in the first panoramic image, and adding an image detail into the first panoramic image, to obtain a second panoramic image with a second resolution.

The first resolution is smaller than the second resolution.

In some embodiments, the present disclosure provides a panoramic image generation apparatus, including:
a text-to-image unit configured to generate a first panoramic image with a first resolution based on image description text; and
a control unit configured to redraw and zoom in the first panoramic image, and add an image detail into the first panoramic image, to obtain a second panoramic image with a second resolution.

The first resolution is smaller than the second resolution.

In some embodiments, the present disclosure provides an electronic device, including: at least one memory and at least one processor.

The memory is configured to store program codes. The processor is configured to call the program codes stored in the memory to perform the above method.

In some embodiments, the present disclosure provides a computer-readable storage medium for storing program codes stored. The program codes, when executed by a processor, cause the processor to perform the above method.

According to the panoramic image generation method provided in the embodiments of the present disclosure, by redrawing and zooming in a generated panoramic image and adding a detail into the panoramic image, a high resolution is achieved, and true local details are ensured.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, identical or similar reference numerals represent identical or similar elements. It should be understood that the accompanying drawings are illustrative, and components and elements may not necessarily be drawn to scale.
FIG. 1 is a flowchart of a panoramic image generation method according to an embodiment of the present disclosure.
FIG. 2 is a flowchart of a panoramic image generation method according to an embodiment of the present disclosure.
FIG. 3 is a schematic diagram of a panoramic image generation method according to an embodiment of the present disclosure.
FIG. 4 is a schematic diagram of inpainting the top and bottom of a panoramic image according to an embodiment of the present disclosure.
FIG. 5 is a schematic diagram of a panoramic image in an ERP format and a panoramic image in a CMP format according to an embodiment of the present disclosure.
FIG. 6 is a schematic diagram of training a first model according to an embodiment of the present disclosure.
FIG. 7 is a schematic diagram of adjusting a color of a base according to an embodiment of the present disclosure.
FIG. 8 is a schematic structural diagram of an electronic device according to an embodiment of the present disclosure.

### DETAILED DESCRIPTION OF EMBODIMENTS

It can be understood that before use of the technical solutions disclosed in various embodiments of the present disclosure, users should be informed of the type, scope of use, usage scenarios, and the like of personal information involved in the present disclosure in accordance with relevant laws and regulations in an appropriate manner, so as to obtain authorization from the users.

For example, in response to that an active request of a user has been received, prompt information is sent to the user to clearly remind the user that personal information of the user needs to be involved in an operation requested to be executed. Thus, the user can independently select whether to provide the personal information to software or hardware such as an electronic device, an application program, a server, or a storage medium that performs the operation of the technical solutions of the present disclosure according to the prompt information.

As an optional but non-restrictive implementation, in response to that an active request of a user has been received, the prompt information is sent to the user through, for example, a pop-up window where the prompt information can be presented in text. In addition, the pop-up window can also carry a selection control for the user to select whether to "agree" or "refuse" to provide the personal information to the electronic device.

It can be understood that the above notification and the above user authorization obtaining process are only illustrative and do not constitute a limitation on the implementations of the present disclosure. Other methods that meet the relevant laws and regulations can also be applied to the implementations of the present disclosure.

It can be understood that data involved in the technical solutions (including but not limited to the data itself, and obtaining or use of the data) should comply with the requirements of corresponding laws and regulations and relevant provisions.

The embodiments of the present disclosure will be described in detail below with reference to the accompanying drawings. Although the accompanying drawings show some embodiments of the present disclosure, it should be understood that the present disclosure can be implemented in various forms, and should not be explained as being limited to the embodiments stated herein. Rather, these embodiments are provided for understanding the present disclosure more thoroughly and completely. It should be understood that the accompanying drawings and embodiments of the present disclosure are only used for illustration, but are not intended to limit the protection scope of the present disclosure.

It should be understood that steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and variants thereof used herein indicate open inclusion, that is, "include but are not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not used to limit the sequence or interdependence of functions performed by these apparatuses, modules, or units.

It should be noted that the modifiers "one" and " a plurality of" mentioned in the present disclosure are illustrative and not restrictive, and those skilled in the art should understand that unless the context clearly indicates otherwise, the modifiers should be understood as "one or more".

Names of messages or information interacted between a plurality of apparatuses in the implementations of the present disclosure are only for illustrative purposes and are not intended to limit the scopes of these messages or information.

The following will describe the solutions provided by the embodiments of the present disclosure in conjunction with the accompanying drawings.

In the field of extended reality, such as virtual reality and augmented reality, a user immerses oneself in a space constructed by extended reality, and a comfortable extended reality space (which may be a purely virtual space or a space where virtuality and reality are mixed together) needs to be built. An environmental image displayed in the extended reality space is a 360° panoramic image, which is different from a single camera perspective or a single object. In the related art, a technology for generating a 360° panoramic image has problems such as low resolution, low local realism, a single style, and the like.

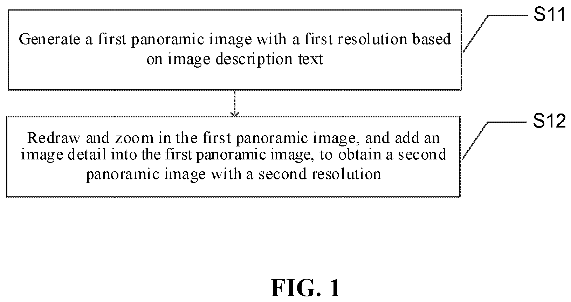

As shown in FIG. 1, FIG. 1 is a flowchart of a panoramic image generation method according to an embodiment of the present disclosure. The method includes the following steps.

At S11, a first panoramic image with a first resolution is generated based on image description text.

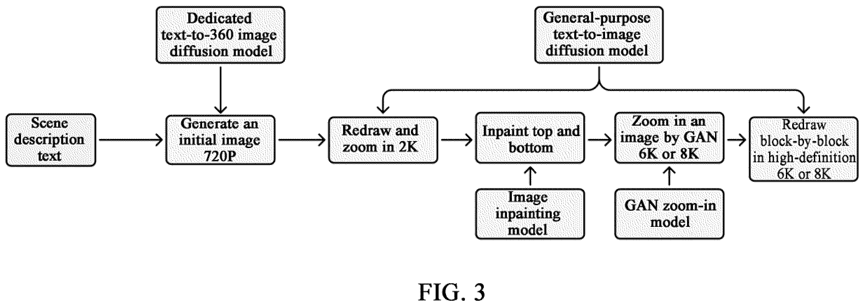

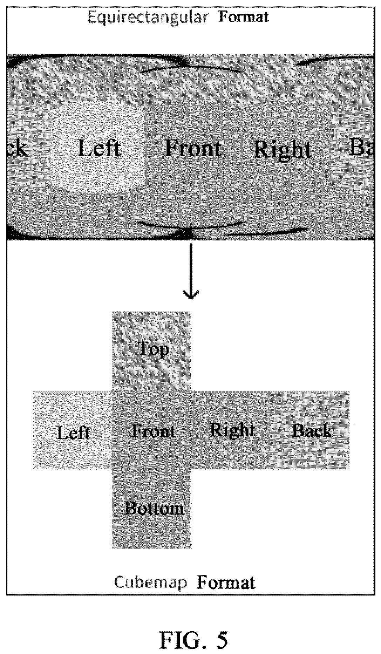

In some embodiments, an executing party of the method provided in this embodiment of the present disclosure may be a terminal, such as an extended reality device. As shown in FIG. 3, the image description text (scene description text) may be text input or selected by a user of the extended reality device. The image description text is used for describing characteristics of the first panoramic image that the user wishes to generate, such as a grassland at night, and a full moon and stars in the sky. The image description text may be input to a text-to-image model, and the first panoramic image (an initial image in FIG. 3) with the first resolution is generated through the text-to-image model (such as a dedicated text-to-360-image diffusion model in FIG. 3). The text-to-image model is used for generating a panoramic image that matches the input text based on the input text, and may be a diffusion model. The panoramic image may be a 360° spherical image. The first resolution may be 720P of an image. As shown in FIG. 5, a format of the first panoramic image may be an equirectangular (ERP) format.

At S12, the first panoramic image is redrawn and zoomed in, and the first panoramic image is added an image detail, to obtain a second panoramic image with a second resolution.

In some embodiments, after the first panoramic image with the first resolution is obtained, the first panoramic image may be redrawn and zoomed in. In order to ensure the integrity of an image structure during the redrawing and zooming in, the image detail needs to be added to obtain the second panoramic image with the second resolution. The first resolution is smaller than the second resolution, and the second resolution may be 2K (in FIG. 3, the initial image is redrawn and zoomed in to a resolution of 2K through using a general-purpose text-to-image diffusion model).

In this embodiment, by redrawing and zooming in the generated panoramic image and adding the detail in the panoramic image, a high resolution is achieved, and true local details are ensured.

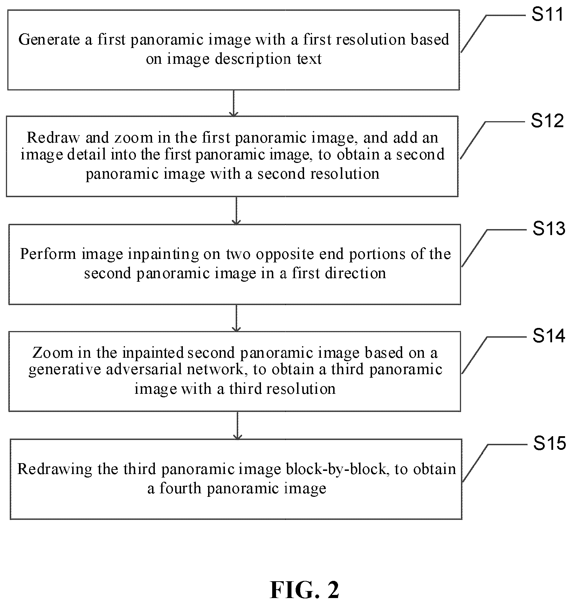

As shown in FIG. 2, FIG. 2 is a flowchart of a panoramic image generation method according to an embodiment of the present disclosure, the method further includes, after step S11 and step S12:
at S13, performing image inpainting on two opposite end portions of the second panoramic image in a first direction.

In some embodiments, the first direction may be an axial direction of the second panoramic image that passes through a circle center of the second panoramic image. The second panoramic image is also a spherical 360° image. The first direction may be an axial direction of north and south poles. By performing image inpainting, defects in the second panoramic image may be removed, thus improving the overall quality of the image.

In some embodiments of the present disclosure, a flowchart of a panoramic image generation method further includes: S14 and S15.

At S14, the second panoramic image is zoomed in based on a generative adversarial network, to obtain a third panoramic image with a third resolution.

In some embodiments, the second panoramic image is zoomed in again through the generative adversarial network (GAN), which may specifically use an enhanced super-resolution generative adversarial network (ESRGAN). An image zoom-in function of the GAN may perform zoom in while ensuring the sharpness of an image. The second resolution is smaller than the third resolution, and the third resolution may range from 6K to 8K.

At S15, the third panoramic image is redrawn block-by-block, to obtain a fourth panoramic image.

In some embodiments, the image zoomed in by the image zoom-in function of the GAN can ensure the sharpness of the image, but lacks local realism. Therefore, it is necessary to introduce redrawing block-by-block in high-definition, so that the redrawing block-by-block can be performed through the general-purpose text-to-image diffusion model in FIG. 3, thereby improving the local realism. The fourth panoramic image has the same resolution as the third panoramic image, and is locally more true.

The panoramic image generation solution in the related art can only generate a panoramic image with a resolution of 1024 × 512, and does not have a high-definition zoom-in function. Alternatively, a single-segment zoom-in mode is used to directly zoom in the image to a resolution of 6K, which lacks details and has low realism. In some embodiments of the present disclosure, considering the above problems, a multi-stage processing flow is used. Each step has a specific objective and function, ensuring a gradual improvement from the first panoramic image with an initial low resolution to the fourth panoramic image with high quality. In the zoom-in process, by using the text-to-image model, the GAN model, and the like, the integrity of an image structure can be ensured, and rich details can be added. By inpainting the end portions to remove defects, the overall quality of the image is improved. By redrawing block-by-block, the local realism of the image can be ensured. In some embodiments of the present disclosure, a panoramic image is generated through a multi-stage mode, which achieves a high resolution, ensures true local details, and achieves a high-quality and detail-enriched panoramic image effect.

In some embodiments of the present disclosure, the first panoramic image with the first resolution being generated based on the image description text includes: receiving the image description text that is input or selected; displaying one or more candidate images generated based on the image description text; and determining, in response to a selection operation for the candidate images, a selected candidate image as the first panoramic image.

In some embodiments, the method provided in the present disclosure can be applied to an extended reality device to select and set a virtual scene of an extended reality world during setting of the extended reality device. During the setting of the virtual scene, a user can select one or more existing labels as the image description text, or may manually or verbally input the image description text. The labels are preset specific descriptive words, such as high-altitude scenery, flat ground scenery, night scenery, or day scenery. After the image description text is determined, the text-to-image model may generate one or more candidate images based on the image description text, and the candidate images are panoramic images with the first resolution. The one or more candidate images may be generated through one text-to-image model, or a plurality of candidate images may be generated through a plurality of text-to-image models. The plurality of candidate images may have different styles, and the user can select a favorite candidate image from the plurality of candidate images. The selected candidate image may serve as the first panoramic image. By providing the candidate images, the finally generated panoramic image not only satisfies the image description text, but also is the most in line with a style preferred by the user.

In some embodiments of the present disclosure, the first panoramic image being redrawn and zoomed in, and the first panoramic image being added the image detail, to obtain the second panoramic image with the second resolution includes: redrawing and zooming in the first panoramic image by using a diffusion model, where, during the redrawing and zooming in, a denoising strength of a first value is used to zoom in the first panoramic image. The first value is greater than 0.5 and less than 0.7.

In some embodiments, the first panoramic image is redrawn and zoomed in by using the diffusion model, and the denoising strength is a key parameter in an image-to-image generation. After the first panoramic image is zoomed in, the first panoramic image is encoded into a latent spatial image, add noise is added into the first panoramic image. Then, the denoising strength is set to control how much noise is added into the latent spatial image. 0 represents adding no noise, and 1 represents adding largest noise to make the denoising strength become a completely random tensor in the latent spatial image. Then, a noise predictor inputs the latent spatial image and the image description text to the diffusion model, and provides a predicted noise tensor to be subtracted. The noise tensor is subtracted from the latent spatial image to obtain a new image. The step of predicting a noise tensor and the step of subtracting the noise tensor are repeated for a specific number of times, and then the latent spatial image is restored into a pixel spatial image to obtain the second panoramic image. If the denoising strength is 1, the obtained panoramic image is equivalent to a result obtained by running a text-to-image tool based solely on a text instruction, that is, generating an image from pure noise. By using a denoising strength of 0.65, most of features of the first panoramic image itself can be maintained, and details that match the image description text can be automatically added.

In some embodiments of the present disclosure, the first panoramic image is in an Equirectangular (ERP) format. The performing image inpainting on two opposite end portions of the second panoramic image in the first direction includes: converting the first panoramic image in the ERP format into an image in a cubemap (CMP) format, inpainting top and bottom regions of the image in the CMP format, and converting the image from the CMP format back to the ERP format.

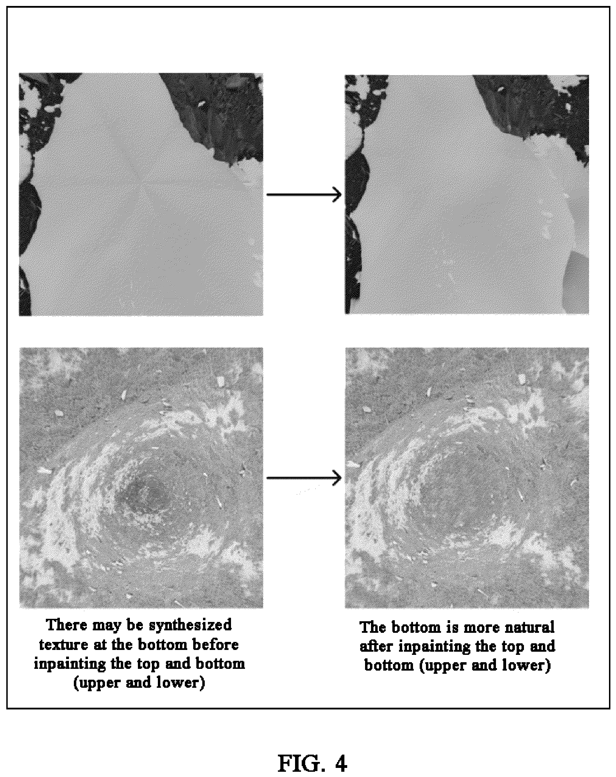

In some embodiments, as shown in FIG. 5, the ERP format is projecting latitude and longitude lines on a spherical surface onto a cylindrical surface, and then opening the cylindrical surface along a generatrix of the cylindrical surface to form a screen. For example, by opening the world map of the Earth based on latitudes and longitudes onto a flat image, a corresponding ERP image can be obtained. The ERP format and the CMP format can be inter-converted. Specifically, the image inpainting model in FIG. 3 may be used to inpaint the top and bottom of the image in the CMP format. The image inpainting model may use a large mask inpainting (LAMA) model to inpaint the top and bottom image of the second panoramic image (the inpainting of the top and bottom in FIG. 3). Through the image inpainting, generated defects can be removed. As shown in FIG. 4, the image in the CMP format that is not subjected to the inpainting of the top and bottom regions is shown on the left hand side of FIG. 4. The top region is shown on the left upper side of FIG. 4, and the bottom region is shown on the left lower side of FIG. 4. A region in the CMP format that is subjected to the inpainting of the top and bottom regions is shown on the right hand side. It can be seen that the defects in the middle region of the upper left part and the lower left part of FIG. 4 are removed through inpainting, so that the image is more natural.

In some embodiments of the present disclosure, the third panoramic image being redrawn block-by-block includes: dividing the third panoramic image into n rows × m columns of local block images, where adjacent local block images have an overlapping region of a first number of pixels therebetween; and performing, on each local block image, a zoom-in operation with a denoising strength of a second value, and performing, in a step of denoising, overlapping fusion on the local block images. The second value is greater than 0.3 and less than 0.5.

In some embodiments, the third panoramic image may be in the ERP format. For the third panoramic image, it is divided into n rows × m columns (e.g. two rows and six columns) of local block images, and an overlapping region with 256 pixels may be maintained between the local block images to achieve smooth transitioning. A zoom-in operation with a denoising strength of 0.4 is performed on each local block image, and overlapping fusion is performed on the local block images in each denoising step (one step in denoising iteration). This ensures smooth transitioning and adds details in the zoom-in process. Further, since the second value is not greater than 0.5 and not less than 0.3, it ensures that the details can be changed to a particular extent without significant changes. In this embodiment, the panoramic image is divided into a plurality of local block images, and each local block image is independently zoomed in while maintaining the overlapping regions between the local block images to ensure the smooth transitioning and the overall consistency.

In some embodiments of the present disclosure, two local block images at two ends in a row direction and/or a column direction have an overlapping region. In some embodiments, in order to ensure seamless connection at leftmost side and rightmost side in the row direction and at topmost side and bottommost side in the column direction of the panoramic image, during the division of the local block images, it is ensured that the two local block images at the two ends in the row direction and/or the column direction still have an overlapping region. That is, when the local block image at one end is taken out, the overlapping region of the local block image at the other end in the row direction and/or column direction may be taken out, thereby achieving seamless zooming in. In this embodiment, a seam processing mechanism at the two ends in the row direction and/or the column direction ensures the continuity and visual effect of the image.

In order to better explain the embodiments of the present disclosure, the following will provide an explanation in conjunction with FIG. 3. In order to improve the resolution of a panoramic image and solve problems such as untrue details, a multi-stage panoramic image link is used. The above problems are solved through a link of zooming in for many times.

After a user inputs scene description text (image description text), a dedicated text-to-360-image diffusion model is first used to generate an initial skybox (first panoramic image) in ERP format with a resolution of 720P.

A general-purpose text-to-image diffusion model is then called to redraw and zoom in the initial image. In order to ensure the quality of the zoom-in process, a denoising strength of 0.65 is used to zoom in the initial image to obtain a 2K image (second panoramic image). Additional details may be added while ensuring a correct structure of the ERP image.

The second panoramic image in ERP format is converted to a cubemap format, and an image inpainting model (such as a LAMA model) is used to inpaint central regions of the top and bottom (upper and lower ) of the skybox, to remove generated defects. Then, it is converted back to the ERP format.

An ESRGAN is used to zoom in a GAN-based image to 6K or 8K.

Since an image zoom-in function of the GAN can ensure the sharpness of an image but lacks local realism, the algorithm further introduces a redrawing block-by-block function (this process is similar to MultiDiffusion, but a left and right seam function is additionally added). A method for zooming in and dividing the ERP image includes: dividing a 6K or 8K panoramic image into 2 × 6 local block images (2 rows and 6 columns), maintaining an overlapping region with 256 pixels between the blocks for smooth transitioning, performing a zoom-in operation with a denoising strength of 0.4 on each block image, and performing overlapping fusion on the blocks in each denoising step. In order to ensure seamless connection on the leftmost and rightmost sides of the panoramic image, the algorithm can ensure that there are still overlapping regions between the rightmost and leftmost blocks during the division (namely, when a block on the rightmost side is taken out, the overlapping region on the leftmost side can be taken out), thus achieving seamless zooming in.

In some embodiments of the present disclosure, the first panoramic image with the first resolution being generated based on the image description text includes: inputting the image description text to a first model to generate the first panoramic image with a target style. Before the first panoramic image with the first resolution being generated based on the image description text, the method further includes: training the first model by using a reference panoramic image with a style, to enable the first model to generate a panoramic image with a style.

In some embodiments, the target style may be a style described in the image description text or may be a style automatically selected by the first model. The target style may be a pastoral style, an urban style, a classical style, or the like. The first model may be a diffusion model. The first model needs to be trained before use. By using a reference panoramic images with a style (the reference panoramic image with the style is an existing panoramic image), the first model may generate a panoramic image with a style, which solves the problem of lack of a style in a panoramic image.

In some embodiments of the present disclosure, the reference panoramic image with the style is generated by the following operations, includes: obtaining an existing reference panoramic image (which does not have a style at this time) and a style reference image with a highest similarity with a feature of the reference panoramic image; inputting a depth estimation result of the reference panoramic image to a depth controller, and inputting the style reference image to a style adapter; and inputting the reference panoramic image, an output of the depth controller, and an output of the style adapter to the first model for image redrawing, to obtain the reference panoramic image with the style.

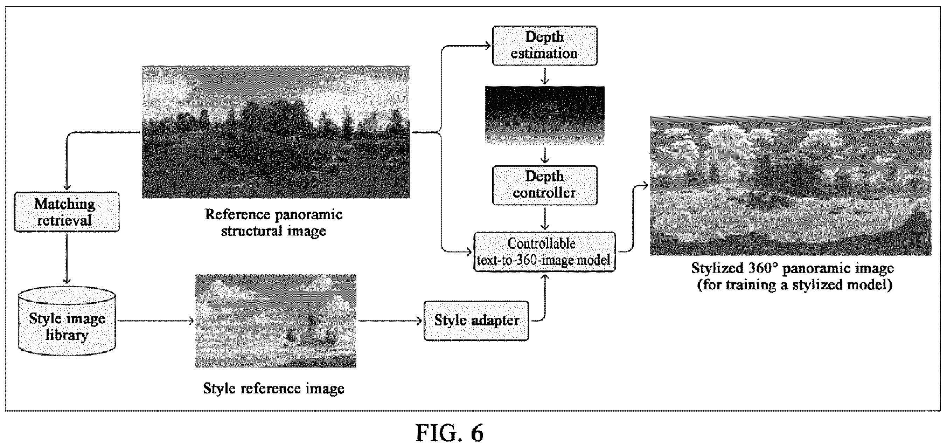

In some embodiments, as shown in FIG. 6, in the process of training the first model (the controllable text-to-360-image model in FIG. 6), the reference panoramic image (a reference panoramic structural image in FIG. 6, which has no style) is first obtained. A closest style reference image is selected as the style adapter (IP-Adapter) from an existing style image library in conjunction with content matching retrieval based on contrastive language-image pre-training (CLIP) feature similarity. The style adapter is an adapter of the first model. The reference panoramic image may be used for depth estimation (such as using Depth-Anything to estimate a depth). A depth estimation result may be input to an input of a depth controller (such as ControlNet). An output of the depth controller and an output of the style adapter are intermediate-layer feature residuals of a diffused denoising network (a first network). The denoising network can achieve a particular effect through an additional residual. These outputs are input to the first model for image redrawing. The reference panoramic image is redrawn as a reference panoramic image with the style of the style reference image. During redrawing, the denoising strength of the first value may be used. The resolution of the reference panoramic image may be greater than the first resolution. By improving the resolution in the training stage, the resolution of the generated first panoramic image with the style can be ensured. In this embodiment, the reference panoramic image with the style is generated by the above way, to be used for training the first model, so as to obtain the first model that can achieve a plurality of styles.

In some embodiments of the present disclosure, the method further includes: generating a base; and displaying a target panoramic image, and displaying the base in a bottom region of the target panoramic image. The target panoramic image is the second panoramic image, the third panoramic image, or the fourth panoramic image.

In some embodiments, the target panoramic image may be a panoramic image displayed in an extended reality device, which may be a panoramic image viewed by a user when the user uses the extended reality device. Any one of the second panoramic image, the third panoramic image, or the fourth panoramic image may be used as the target panoramic image. Therefore, the steps of generating a base and displaying a target panoramic image and base may be performed after step S12, S13, S14, or S15. By displaying the base while displaying the panoramic image, a user can have a foothold to view an extended reality world when using the extended reality device. In some embodiments, the base may be a three-dimensional model. There is a bottom region in the target panoramic image, but the target panoramic image which is an image and is not a model cannot directly follow footsteps of the user. This experience is less true. Displaying the base that is a three-dimensional model in the extended reality world allows the user to interact with the base, which is more true.

In some embodiments of the present disclosure, before generating the base, the method further includes: determining a perspective of the target panoramic image, and determining whether to generate the base based on the perspective of the target panoramic image; and performing, in response to the perspective of the target panoramic image being a preset type of perspective, a step of generating the base.

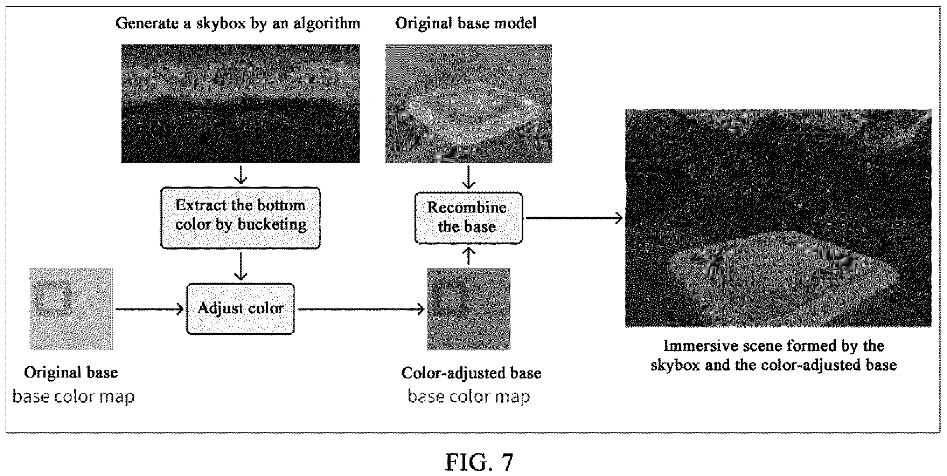

In some embodiments, before generating the base, whether a target image to be displayed has the preset type of perspective may be determined. The preset type of perspective is, for example, a high-altitude perspective. In this case, if the base is not displayed, the user will be in a suspended state in the extended reality world and may be fear of height or dizzy. Therefore, when the perspective of the target panoramic image is the preset type of perspective, the base needs to be generated and displayed. If the perspective of the target panoramic image is not the preset type of perspective, the base may not be generated. In some embodiments, as shown in FIG. 7, the target panoramic image may be a panoramic image of the high-altitude environment (skybox). If this panoramic image is directly used as a background image of the extended reality world, it may cause a feeling such as a fear of height or dizziness, causing discomfort to the user. In order to at least locally solve this problem, in this embodiment, the base serves as a standing site for the user in the extended reality space, which enhances the user experience.

In some embodiments, generating the base includes: bucketing a portion or all of pixels of the bottom region of the target panoramic image in a hue, saturation, value (HSV) space; determining, as a target HSV value, an HSV value of a range for a bucket with most pixels; and adjusting a color of the base to the target HSV value.

In some embodiments, the target panoramic image is displayed around the user in the extended reality space, and some (e.g. 25%) or all pixels of the bottom region of the target panoramic image are converted to HSV for bucketing. The bucketing process may be dividing each of the three dimensions HSV into a plurality of ranges (e.g. 30 equal ranges), thus forming a three-dimensional bucket. Each pixel may be allocated to a corresponding bucket, so that a number of pixels in each bucket may be counted. A bucket with most pixels is found out. This bucket represents the most common color feature at the bottom of the target panoramic image, and an HSV value is selected as the target HSV value from the range corresponding to the bucket. The base (original base) may be a preset virtual base that is not originally located in the target panoramic image. Then, a difference between the color of the base and the target HSV value may be calculated as an offset. This offset may be applied to a color map of the base to adjust the overall color of the base, making it more in line with the color of the bottom of the target panoramic image. The adjusted color of the base is combined with a base model to create a base that better matches the bottom of the target panoramic image, and the base is combined with the target panoramic image to form a virtual environment with a better matched color. In this way, the color of the virtual base is consistent with the color of the bottom of the panoramic image, thus reducing the discomfort of the user such as fear of height and dizziness in the immersive experience and enhancing the virtual experience of the user.

In this embodiment of the present disclosure, by using the multi-stage panoramic image generation solution, a higher resolution such as 6K or 8K and a true local detail are achieved. The designed multi-stage panoramic image generation solution, on the basis of ensuring the correctness of the structure, achieves a high-quality and detail-enriched generation effect.

In order to solve the problem of lack of style data of panoramic images, based on the reference panoramic image and the style reference image, generation of the panoramic image data with the style is achieved in batches, and then training on the first model with a plurality of styles is achieved.

Based on the design of the base for an immersive panoramic image scene, in order to solve the problem of dizziness or the like caused by direct viewing of high-altitude scenery, the matching base is used as a standing site for a user in the extended reality space, thus forming a final immersive scene. In order to achieve a better color matching relationship between the matching base and the panoramic image, the HSV extraction function for the bottom of the panoramic image is used to adjust the HSV color of the base.

The present disclosure further provides a panoramic image generation apparatus, including:
a text-to-image unit configured to generate a first panoramic image with a first resolution based on image description text; and
a control unit configured to redraw and zoom in the first panoramic image, and add an image detail into the first panoramic image, to obtain a second panoramic image with a second resolution.

The first resolution is smaller than the second resolution.

In some embodiments, the control unit is further configured to perform image inpainting on two opposite end portions of the second panoramic image in a first direction.

In some embodiments, the control unit is further configured to zoom in the second panoramic image based on a generative adversarial network, to obtain a third panoramic image with a third resolution; and
redraw the third panoramic image block-by-block, to obtain a fourth panoramic image.

The second resolution is smaller than the third resolution.

In some embodiments, generating the first panoramic image with the first resolution based on image description text includes:
receiving the image description text that is input or selected;
displaying one or more candidate images generated based on the image description text; and
determining, in response to a selection operation for the candidate images, a selected candidate image as the first panoramic image.

In some embodiments, redrawing and zooming in the first panoramic image, and adding the image detail into the first panoramic image, to obtain the second panoramic image with the second resolution includes:
redrawing and zooming in the first panoramic image by using a diffusion model, where, during the redrawing and zooming in, a denoising strength of a first value is used to zoom in the first panoramic image. The first value is greater than 0.5 and less than 0.7.

In some embodiments, the first panoramic image is in an equirectangular (ERP) format.

The performing image inpainting on two opposite end portions of the second panoramic image in the first direction includes: converting the first panoramic image in the ERP format into an image in a cubemap (CMP) format, inpainting top and bottom regions of the image in the CMP format, and converting the image from the CMP format back to the ERP format.

In some embodiments, redrawing the third panoramic image block-by-block includes:
dividing the third panoramic image into n rows × m columns of local block images, where adjacent local block images have an overlapping region of a first number of pixels therebetween; and
performing, on each local block image, a zoom-in operation with a denoising strength of a second value, and performing, in a step of denoising, overlapping fusion on the local block images. The second value is greater than 0.3 and less than 0.5.

In some embodiments, two local block images at two ends in a row direction and/or a column direction have an overlapping region.

In some embodiments, generating the first panoramic image with the first resolution based on image description text includes: inputting the image description text to a first model to generate the first panoramic image with a target style.

In some embodiments, the control unit is further configured to, before generating the first panoramic image with the first resolution based on image description text, train the first model by using a reference panoramic image with a style, to enable the first model to generate a panoramic image with a style.

In some embodiments, the reference panoramic image with the style is generated by the following operations, including:
obtaining an existing reference panoramic image and a style reference image with a highest similarity with a feature of the reference panoramic image;
inputting a depth estimation result of the reference panoramic image to a depth controller, and inputting the style reference image to a style adapter; and
inputting the reference panoramic image, an output of the depth controller, and an output of the style adapter to the first model for image redrawing, to obtain the reference panoramic image with the style.

In some embodiments, the control unit is further configured to: display a target panoramic image, and display the base in a bottom region of the target panoramic image.

The target panoramic image is the second panoramic image, the third panoramic image, or the fourth panoramic image.

In some embodiments, the control unit is further configured to, before generating the base, determine a perspective of the target panoramic image, and determine whether to generate the base based on the perspective of the target panoramic image.

In some embodiments, the control unit is configured to perform, in response to the perspective of the target panoramic image being a preset type of perspective, a step of generating the base.

In some embodiments, generating the base includes:
bucketing a portion or all of pixels of the bottom region of the target panoramic image in an HSV space;
determining, as a target HSV value, an HSV value of a range for a bucket with most pixels; and
adjusting a color of the base to the target HSV value.

The apparatus embodiment basically corresponds to the method embodiment, so that for related parts, refer to some of the descriptions in the method embodiment. The apparatus embodiment described above is only illustrative, and the modules described as separate components may or may not be separated. Some or all of the modules are selected according to actual needs to achieve the objective of the solution of this embodiment. Those of ordinary skill in the art can understand and implement the present application without creative work.

According to the above, the method and apparatus of the present disclosure have been explained based on the embodiments and application cases. In addition, the present disclosure further provides an electronic device and a computer-readable storage medium. The electronic device and the computer-readable storage medium will be explained below.

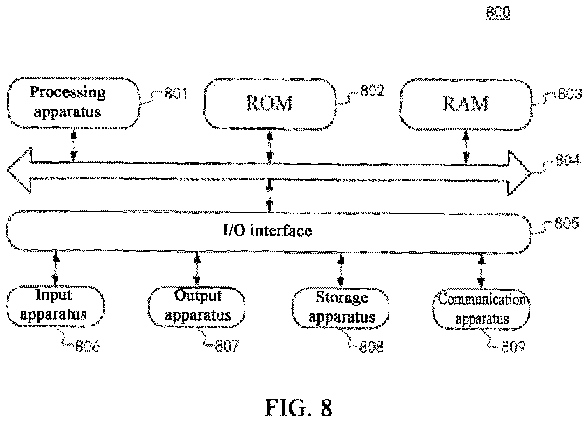

Referring to FIG. 8 below, it illustrates a schematic structural diagram of an electronic device (namely, a terminal device or a server) 800 suitable for implementing an embodiment of the present disclosure. The terminal device in the embodiments of the present disclosure may include, but is not limited to, a mobile terminal such as a mobile phone, a laptop computer, a digital broadcast receiver, a personal digital assistant (PDA), a portable android device (PAD), a portable media player (PMP), a vehicle-mounted terminal (for example, a vehicle-mounted navigation terminal), and a fixed terminal such as digital television (TV) and a desktop computer. The electronic device shown in the figure is only an example and should not impose any limitations on the functionality and scope of use of the embodiments of the present disclosure.

The electronic device 800 may include a processing apparatus (for example, a central processing unit or a graphics processing unit) 801 that may perform a variety of appropriate actions and processing in accordance with a program stored in a read-only memory (ROM) 802 or a program loaded from a storage apparatus 808 into a random access memory (RAM) 803. Various programs and data required for operations of the electronic device 800 may alternatively be stored in the RAM 803. The processing apparatus 801, the ROM 802, and the RAM 803 are connected to each other through a bus 804. An input/output (I/O) interface 805 is also connected to the bus 804.

Usually, the following apparatuses can be connected to the I/O interface 805: an input apparatus 806 including a touch screen, a touchpad, a keyboard, a mouse, a camera, a microphone, an accelerometer, a gyroscope, and the like; an output apparatus 807 including a liquid crystal display (LCD), a speaker, a vibrator, and the like; a storage apparatus 808 including a magnetic tape, a hard disk drive, and the like; and a communication apparatus 809. The communication apparatus 809 can allow the electronic device 800 to wirelessly or wiredly communicate with other devices to exchange data. Although the figure shows the electronic device 800 with multiple apparatuses, it should be understood that the electronic device 800 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including computer programs carried on a computer-readable medium, and the computer programs include program codes used for performing the methods shown in the flowcharts. In such an embodiment, the computer programs may be downloaded and installed from a network through the communication apparatus 809, or installed from the storage apparatus 808, or installed from the ROM 802. When the computer programs are executed by the processing apparatus 801, the above-mentioned functions defined in the method of the embodiment of the present disclosure are performed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an erasable programmable read-only memory (EPROM or flash memory), an optical fiber, a compact disc read-only memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signal may be in various forms, including but not limited to an electromagnetic signal, an optical signal, or any suitable combination thereof. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a local area network ("LAN"), a wide area network ("WAN"), an internetwork (for example, the Internet), a peer-to-peer network (for example, an ad hoc peer-to-peer network), and any currently known or future-developed network.

The computer-readable medium may be included in the electronic device or exist alone and is not assembled into the electronic device.

The above computer-readable medium carries one or more programs. When executed by the electronic device, the one or more programs cause the electronic device to implement the above method of the present disclosure.

Computer program codes for performing the operations of the present disclosure may be written in one or more programming languages or a combination thereof. The above programming languages include an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of the unit does not constitute a limitation on the unit itself in a situation.

The functions described herein above may be performed, at least in part, by one or a plurality of hardware logic components. For example, non-restrictively, example hardware logic components that can be used include: a field programmable gate array (FPGA), an application specific integrated circuit (ASIC), application specific standard parts (ASSP), a system on chip (SOC), a complex programmable logic device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, a panoramic image generation method is provided, and the method includes:
generating a first panoramic image with a first resolution based on image description text; and
redrawing and zooming in the first panoramic image, and adding an image detail into the first panoramic image, to obtain a second panoramic image with a second resolution.

The first resolution is smaller than the second resolution.

According to one or more embodiments of the present disclosure, a panoramic image generation method is provided, and the method further includes: performing image inpainting on two opposite end portions of the second panoramic image in a first direction.

According to one or more embodiments of the present disclosure, a panoramic image generation method is provided, and the method further includes: zooming in the second panoramic image based on a generative adversarial network to obtain a third panoramic image with a third resolution; and
redrawing the third panoramic image block-by-block, to obtain a fourth panoramic image.

The second resolution is smaller than the third resolution.

According to one or more embodiments of the present disclosure, a panoramic image generation method is provided. Generating the first panoramic image with the first resolution based on image description text includes:
receiving the image description text that is input or selected;
displaying one or more candidate images generated based on the image description text; and
determining, in response to a selection operation for the candidate images, a selected candidate image as the first panoramic image.

According to one or more embodiments of the present disclosure, a panoramic image generation method is provided, and redrawing and zooming in the first panoramic image, and adding the image detail into the first panoramic image, to obtain the second panoramic image with the second resolution includes:
redrawing and zooming in the first panoramic image by using a diffusion model, where, during the redrawing and zooming in, a denoising strength of a first value is used to zoom in the first panoramic image. The first value is greater than 0.5 and less than 0.7.

According to one or more embodiments of the present disclosure, a panoramic image generation method is provided, and the first panoramic image is in an equirectangular (ERP) format.

Performing image inpainting on two opposite end portions of the second panoramic image in the first direction includes: converting the first panoramic image in the ERP format into an image in a cubemap (CMP) format, inpainting top and bottom regions of the image in the CMP format, and converting the image from the CMP format back to the ERP format.

According to one or more embodiments of the present disclosure, a panoramic image generation method is provided, and redrawing the third panoramic image block-by-block includes:
dividing the third panoramic image into n rows × m columns of local block images, where adjacent local block images have an overlapping region of a first number of pixels therebetween; and
performing, on each local block image, a zoom-in operation with a denoising strength of a second value, and performing, in a step of denoising, overlapping fusion on the local block images. The second value is greater than 0.3 and less than 0.5.

According to one or more embodiments of the present disclosure, a panoramic image generation method is provided, and two local block images at two ends in a row direction and/or a column direction have an overlapping region.

According to one or more embodiments of the present disclosure, a panoramic image generation method is provided, and generating the first panoramic image with the first resolution based on image description text includes: inputting the image description text to a first model to generate a first panoramic image with a target style.

Before generating the first panoramic image with the first resolution based on image description text, the method further includes: training the first model by using a reference panoramic image with a style, to enable the first model to generate a panoramic image with a style.

According to one or more embodiments of the present disclosure, a panoramic image generation method is provided, and the reference panoramic image with the style is generated by the following operations, including:
obtaining an existing reference panoramic image and a style reference image with a highest similarity with a feature of the reference panoramic image;
inputting a depth estimation result of the reference panoramic image to a depth controller, and inputting the style reference image to a style adapter; and
inputting the reference panoramic image, an output of the depth controller, and an output of the style adapter to the first model for image redrawing, to obtain the reference panoramic image with the style.

According to one or more embodiments of the present disclosure, a panoramic image generation method is provided, and the method further includes: generating a base; and
displaying a target panoramic image, and displaying the base in a bottom region of the target panoramic image.

The target panoramic image is the second panoramic image, the third panoramic image, or the fourth panoramic image.

According to one or more embodiments of the present disclosure, a panoramic image generation method is provided, and before generating the base, the method further includes: determining a perspective of the target panoramic image, and determining whether to generate the base based on the perspective of the target panoramic image; and
performing, in response to the perspective of the target panoramic image being a preset type of perspective, a step of generating the base.

According to one or more embodiments of the present disclosure, a panoramic image generation method is provided, and generating the base includes:
bucketing a portion or all of pixels of the bottom region of the target panoramic image in an HSV space;
determining, as a target HSV value, an HSV value of a range for a bucket with most pixels; and
adjusting a color of the base to the target HSV value.

According to one or more embodiments of the present disclosure, a panoramic image generation apparatus is provided, and the apparatus includes:
a text-to-image unit configured to generate a first panoramic image with a first resolution based on image description text; and
a control unit configured to redraw and zoom in the first panoramic image, and add an image detail into the first panoramic image, to obtain a second panoramic image with a second resolution.

The first resolution is smaller than the second resolution.

According to one or more embodiments of the present disclosure, an electronic device is provided, and the electronic device includes at least one memory and at least one processor.

The at least one memory is configured to store program codes. The at least one processor is configured to call the program codes stored in the at least one memory to perform any one of the above methods.

According to one or more embodiments of the present disclosure, a computer-readable storage medium is provided. The computer-readable storage medium stores program codes which, when executed by a processor, cause the processor to perform the above method.

The foregoing descriptions are merely preferred embodiments of the present disclosure and explanations of the applied technical principles. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, For example, a technical solution formed by a replacement of the foregoing features with technical features with similar functions disclosed in the present disclosure (but not limited thereto) also falls within the scope of the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A panoramic image generation method, comprising:
generating a first panoramic image with a first resolution based on image description text (S11); and
redrawing and zooming in the first panoramic image, and adding an image detail into the first panoramic image, to obtain a second panoramic image with a second resolution (S12),
wherein the first resolution is smaller than the second resolution.

2. The method according to claim 1, further comprising:
performing image inpainting on two opposite end portions of the second panoramic image in a first direction (S13).

3. The method according to claim 1 or 2, further comprising:
zooming in the second panoramic image based on a generative adversarial network, to obtain a third panoramic image with a third resolution (S14); and
redrawing the third panoramic image block-by-block, to obtain a fourth panoramic image (S15),
wherein the second resolution is smaller than the third resolution.

4. The method according to claim 1, wherein generating the first panoramic image with the first resolution based on the image description text (S11) comprises:
receiving the image description text that is input or selected;
displaying one or more candidate images generated based on the image description text; and
determining, in response to a selection operation for the candidate images, a selected candidate image as the first panoramic image.

5. The method according to claim 1, wherein redrawing and zooming in the first panoramic image, and adding the image detail into the first panoramic image, to obtain the second panoramic image with the second resolution (S12) comprises:
redrawing and zooming in the first panoramic image by using a diffusion model, wherein, during the redrawing and zooming in, a denoising strength of a first value is used to zoom in the first panoramic image, and the first value is greater than 0.5 and less than 0.7.

6. The method according to claim 2, wherein
the first panoramic image is in an equirectangular (ERP) format; and
performing image inpainting on the two opposite end portions of the second panoramic image in the first direction (S13) comprises: converting the first panoramic image in the ERP format into an image in a cubemap (CMP) format, inpainting top and bottom regions of the image in the CMP format, and converting the image from the CMP format back to the ERP format.

7. The method according to claim 3, wherein redrawing the third panoramic image block-by-block (S15) comprises:
dividing the third panoramic image into n rows × m columns of local block images, wherein adjacent local block images have an overlapping region of a first number of pixels therebetween; and
performing, on each local block image, a zoom-in operation with a denoising strength of a second value, and performing, in a step of denoising, overlapping fusion on the local block images, wherein the second value is greater than 0.3 and less than 0.5.

8. The method according to claim 7, wherein
two local block images at two ends in a row direction and/or a column direction have an overlapping region.

9. The method according to claim 1, wherein
generating the first panoramic image with the first resolution based on the image description text (S11) comprises: inputting the image description text to a first model to generate the first panoramic image with a target style; and
before generating the first panoramic image with the first resolution based on the image description text (S11), the method further comprises: training the first model by using a reference panoramic image with a style, to enable the first model to generate a panoramic image with a style.

10. The method according to claim 9, wherein the reference panoramic image with the style is generated by following operations, comprising:
obtaining an existing reference panoramic image and a style reference image with a highest similarity with a feature of the reference panoramic image;
inputting a depth estimation result of the reference panoramic image to a depth controller, and inputting the style reference image to a style adapter; and
inputting the reference panoramic image, an output of the depth controller, and an output of the style adapter to the first model for image redrawing, to obtain the reference panoramic image with the style.

11. The method according to any one of claims 1 to 10, further comprising:
generating a base; and
displaying a target panoramic image, and displaying the base in a bottom region of the target panoramic image,
wherein the target panoramic image is the second panoramic image, the third panoramic image, or the fourth panoramic image.

12. The method according to claim **11,** before generating the base, further comprising:
determining a perspective of the target panoramic image, and determining whether to generate the base based on the perspective of the target panoramic image; and
performing, in response to the perspective of the target panoramic image being a preset type of perspective, a step of generating the base.

13. The method according to claim 11, wherein generating the base comprises:
bucketing a portion or all of pixels of the bottom region of the target panoramic image in a hue, saturation, value (HSV) space;
determining, as a target HSV value, an HSV value of a range for a bucket with most pixels; and
adjusting a color of the base to the target HSV value.

14. An electronic device, comprising:
at least one memory and at least one processor,
wherein the at least one memory is configured to store program codes, and the at least one processor is configured to call the program codes stored in the at least one memory to perform the method according to any one of claims 1 to 13.

15. A computer-readable storage medium for storing program codes which, when executed by a processor, cause the processor to perform the method according to any one of claims 1 to 13.
